# EUROPEAN PATENT APPLICATION

(11) **EP 4 534 863 A1**
(43) Date of publication of application: **09.04.2025**
(21) Application number: 23201819.2
(22) Date of filing: 05.10.2023
(51) Int. Cl.: F16C 11/06, B60S 1/24, F16C 7/02, F16C 11/10

(54) **BALL-JOINT ASSEMBLY FOR A WINDSCREEN WIPER MODULE**

(71) Applicant: Valeo Systèmes d'Essuyage, 78322 Le Mesnil Saint Denis (FR)
(72) Inventor: SPIECHA, Antoni, 32 050 Skawina (PL); Pawlik, Mateusz, 32 050 Skawina (PL)
(74) Representative: Valeo Visibility

(57) **Abstract**

A ball-joint assembly (34, 36, 38) of a crank (30, 32) and a connecting rod (26, 28), comprising a crankpin (40) fixed to the crank (30, 32) and a socket (58) secured to the connecting rod (26, 28), characterized in that a spherical portion of the crankpin (70) comprises a lateral flat (48) and in that the socket (58) comprises a lower axial end (74 ) which comprises on the one hand an opening (76) for the passage of the crankpin (40) in the internal cavity (70), and on the other hand an obstruction wall (78) extending a peripheral edge (77) delimiting the opening (76) of said lower axial end (74), the obstruction wall (78) extending through the opening (76) to form a reduced passage section for maintaining the crankpin (40) in the internal cavity ( 70) of the socket (58).

## Description

The present invention relates to the field of the windscreen wiper module, and more particularly concerns the ball-joint assembly between components of such modules.

A windscreen wiper module comprises a wiper drive unit whose shaft is connected to two linkage subsystems respectively connected to a wiper shaft rotatably supported in a support member. Said support members and a support member of the wiper drive unit are fixed to the frame of the vehicle.

Linkage subsystems extend between the wiper drive unit and the wiper shaft and comprise a connecting rod linked to a first crank fixed to the shaft of the wiper drive unit and a second crank fixed to the wiper shaft, at least one of the connections between the connecting rod and a crank being a ball-joint assembly. Linkage subsystems transfer rotational motion of the shaft of the wiper drive unit into synchronized oscillatory movement of the wiper shafts.

Some of these modules are pre-mounted such that they arrive in one piece on the vehicle production lines, with stiffening bars between the support member for the drive unit and each support member for the wiper shaft. Only support members for the wiper drive unit and the wiper shaft are to attach to the frame of vehicle. The at least one ball-joint assembly is made in a specific workshop, with an appropriate stamping press that allows a crankpin of the crank to be force-fitted into a cage of the connecting rod.

But simplified systems, without a stiffening bar between the axles, are now designed and their installation on the vehicle, while allowing greater flexibility in the position of the axles in relation to each other, also implies having to achieve the ball-joint assembly on site, where stamping press cannot be used.

It is thus sought to design ball-joint assemblies that allow assembly on production lines involving less effort.

The main subject of the present invention in this context is a ball-joint assembly for a crank and a connecting rod of a windscreen wiper module, comprising a crankpin fixed to the crank and a socket housed in a hole of one end of the connecting rod, the socket being configured to receive in an internal cavity thereof a spherical portion of the crankpin.

According to the invention, the spherical portion of the crankpin comprises a lateral flat, the socket comprising a lower axial end which comprises on the one hand an opening for the passage of the crankpin in the internal cavity, and on the other hand an obstruction wall extending a peripheral edge delimiting the opening of said lower axial end, the obstruction wall extending through the opening to form a reduced passage section for maintaining the crankpin in the internal cavity of the socket.

The ball-joint assembly is advantageous in that it requires little effort from an operator to reliably assemble a connecting rod to a crank when these are delivered to the assembly line without being assembled beforehand, in particular to allow an assembly of the windscreen wiper module on the vehicle which takes mounting play into account. This assembly is said to be effortless insofar as it does not require the operator to force the spherical portion of the crankpin into a socket wherein the opening through which the spherical portion has to be inserted is a disc with a diameter slightly smaller than that of the spherical portion to ensure that once fitted, the spherical portion remains in place in the socket.

Here, the operator can insert the spherical portion into the socket via an opening, which has at least one dimension larger than a corresponding dimension of the spherical portion, since he matches at the time of insertion the flat side of the spherical portion and the obstruction wall of the opening. Once the spherical portion has been inserted into the socket, and an appropriate rotation of the crankpin inside the cavity around the axis of the crankpin is performed, the obstruction wall forms an abutment against the disengagement of the spherical portion because this wall is opposite the spherical portion.

According to another feature, the socket is overmolded onto the end of the connecting rod to be housed in the orifice. The fact of having a socket overmolded on the connecting rod makes it possible to ensure that the socket is arranged on either side of the end of the connecting rod and to ensure better retention of the socket.

According to another characteristic, the crankpin has a first spherical portion and a second spherical portion, arranged on either side of the crank, each spherical portion being truncated by a lateral flat. The crank carrying the crankpin can thus cooperate with two separate connecting rods, each of the connecting rods comprising a socket provided with an obstruction wall in accordance with what has been mentioned to retain the crankpin with a lateral flat.

According to another characteristic, in the case of a crankpin with two spherical portions, the lateral flats are arranged in the same plane, substantially perpendicular to a main elongation plane of the crank.

According to another characteristic, the or each spherical portion of the crankpin is attached to the crank via a connecting collar, the obstruction wall of the socket facing the connecting collar when the corresponding spherical portion is housed in the cavity of the socket.

According to another characteristic, the internal cavity of the socket has a shape of revolution around an axis of revolution of the socket, said obstruction wall extending perpendicularly to said axis of revolution from an edge of the opening of the socket.

According to another characteristic, the internal cavity has an internal annular groove arranged around the axis of revolution of the socket and configured to receive the spherical portion of the crankpin.

According to another feature, the spherical portion of the crankpin has a top flat, opposite the crank, which provides a clearance zone with a closing wall of the socket.

The invention also relates to a vehicle comprising a windscreen wiper module comprising a ball-joint assembly as described above.

The invention also relates to a method for assembling a ball-joint assembly as mentioned above and which comprises at least a step of inserting the crankpin into the socket, the socket having been previously secured to the connecting rod, by a translational movement along an insertion axis perpendicular to the crank to which the crankpin is secured, the crankpin passing through the opening of the socket with the lateral flat facing the obstruction wall, as well as a step of rotating the connecting rod relative to the crank around the insertion axis to cause the spherical portion to rotate within the cavity of the socket, the obstruction wall forming an axial clearance stop for the spherical portion.

Other characteristics and advantages of the invention will appear on reading the following description of several embodiments given by way of indication and not limitation with reference to the attached schematic drawings, in which:
[fig.1] illustrates a wiper module implementing a ball-joint assembly according to the invention;
[fig.2] is a detail view of the module of Figure 1, in an assembly step, showing one end of a connecting rod and one end of a crank capable of being connected by a ball-joint assembly according to the invention;
[fig.3] is an enlargement of Figure 2, which makes more particularly visible the position of the connecting rod and an associated socket with respect to the crank and an associated crankpin, before the connecting rod is assembled on the crank;
[fig.4] is a sectional view of the connecting rod and the crank once assembled via the ball-joint assembly according to the invention.

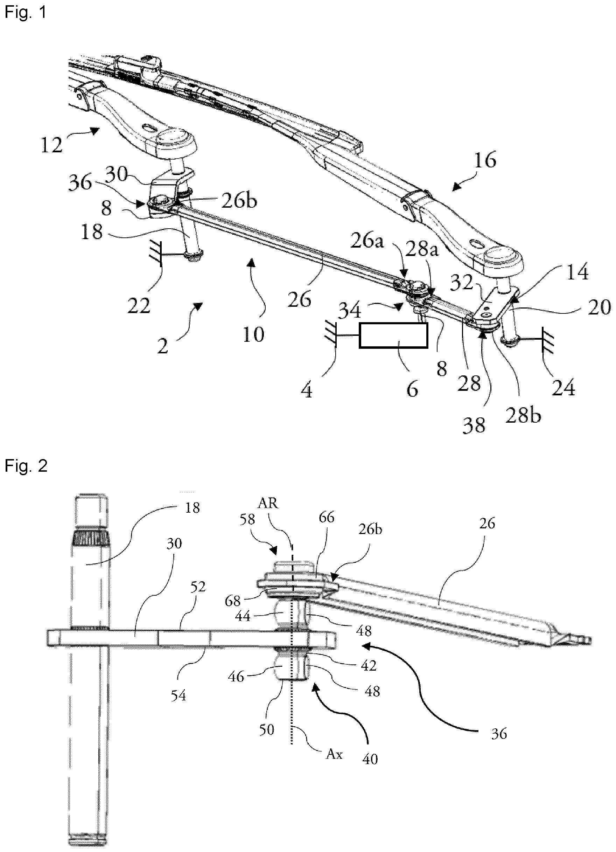

FIG. 1 shows a linkage system for actuating windscreen wipers of a motor vehicle, hereinafter referenced as system 2. When mounted in a motor vehicle, the system 2 is typically fixed to the frame of the vehicle by brackets here schematically illustrated.

A first bracket 4 supports an electric gear motor 6, schematically illustrated, the output shaft 8 of which is intended to drive a first linkage subsystem 10 for a first windscreen wiper 12 and a second linkage subsystem 14 for a second windscreen wiper 16, windscreen wipers 12, 16 each comprising a wiper arm for actuating a wiper blade.

A longitudinal end of the wiper arm is secured to a drive shaft 18, 20, whose position next to the windscreen is fixed by brackets 22, 24, the opposite longitudinal end of the wiper arm being connected to the wiper blade.

Each linkage subsystem 10, 14 extends from the output shaft 8 of the motor 6 to one of the drive shafts 18, 20 and comprised a connecting rod 26, 28 and a crank 30, 32. As illustrated, a first linkage subsystem 10 comprised a first connecting rod 26 and a first crank 30 and a second linkage subsystem 14 including a first connecting rod 28 and a second crank 32.

The connecting rods 26, 28 have a substantially rectilinear elongated general shape extending along an elongation axis A between a first longitudinal end 26a, 28a and a second longitudinal end 26b, 28b. The connecting rods are for example made by stamping a sheet and present an embossed central portion and planar longitudinal ends.

The first longitudinal end 26a, 28a of the connecting rod 26, 28 of a linkage subsystem 10, 14 is hinged to the output shaft 8 of the electric gear motor 6 by a first ball-joint assembly 34 and the second longitudinal end 26b, 28b is hinged to a first end of the crank 30, 32 of the said linkage subsystem by a second ball-joint assembly 36, 38.

The second end of the crank 30, 32 is integrally connected in rotation with the drive shaft of the corresponding windscreen wiper.

Each ball-joint assembly 34, 36, 38 is made with a ball-joint housing, which comprises means for fixing to the connecting rod, and a crankpin fixed to the crank. The crankpin is shaped to be received at least partly in an internal cavity of the ball-joint housing which has corresponding form and dimensions.

More particularly, the crankpin has a spherical portion whose dimensions, i.e. diameter, are substantially equal to corresponding dimensions of the internal cavity of the ball-joint housing.

As previously mentioned, the invention is relative to a ball-joint assembly wherein the ball-joint housing is a socket which is overmolded onto the end of the rod and which comprises a retaining means of the crankpin, such ball-joint assembly being easy to use and reliable.

The invention relating to a particular form of a ball-joint assembly will be described more particularly with reference to the ball-joint assembly arranged between the first connecting rod 26 and the first crank 30 of the first linkage subsystem, as illustrated in figure 2, but it should be noted that it could be implemented in a similar manner at every ball-joint assembly of the system 2.

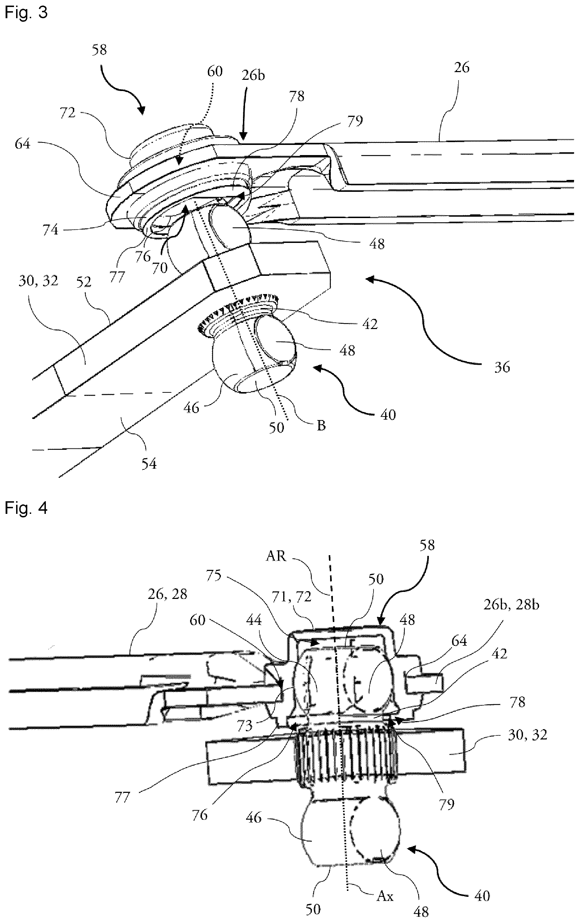

Figures 2 and 3 illustrate that a ball-joint assembly 34, 36, 38 comprises a crankpin 40 fixed to the crank 30, said crankpin comprising at least one spherical portion fixed to the crank via a connecting collar 42 arranged between the crank and the corresponding spherical portion.

In the example illustrated, the crankpin 40 extends on either side of the crank and has a symmetrical configuration with respect to an elongation plane of the crank, with a first spherical portion 44 and a second spherical portion 46 arranged on either side of the crank. It should be noted that in the following description, only one of the spherical portions is described and that this description could apply in the same way to the other spherical portion if a connecting rod were to cooperate with this other spherical portion. Furthermore, a ball-joint assembly in which the crank would be extended on only one side by the crankpin, which in this case only comprised a spherical portion, would not be out of the context of the invention.

Such a configuration makes the system ambidextrous,*i.e*. able to be mounted on either the driver's or the passenger's side of the vehicle, without having to be provided in left- and right-handed versions or otherwise reconfigured or adapted prior to installation.

The first spherical portion 44 of the crankpin 40 is fixed to the first face 52 of the crank 30 and the second spherical portion 46 of the crankpin 40 is fixed to the second face 54 of the crank 30. The at least one spherical portion 44, 46 forms a projection of the crank 30 along an axis of elongation Ax substantially perpendicular to the plane of the crank.

The at least one spherical portion 44, 46 is truncated by at least one lateral flat 48, which locally reduces the diameter of the spherical portion. The lateral flat 48 forms a flat surface which extends in a plane parallel to the elongation axis of the previously mentioned crankpin.

In the case illustrated, where two spherical portions 44, 46 are opposed and arranged on either side of the crank, one can distinguish a pair of lateral flats 48 arranged on either side of the crank, and it is necessary to note that the flat surfaces formed by the lateral flats 48 extend in a substantially coincident plane.

Furthermore, the at least one spherical portion 44, 46 is truncated, opposite the crank, by a top flat 50, which reduces the size of the spherical portion in the direction parallel to the axis of elongation previously mentioned.

When the connecting rod and the crank are assembled to participate in forming the wiper module, the spherical portion 44 of the crankpin 40, or one of the spherical portions 44, 46 of the crankpin 40, is housed in a socket 58 fixed to the connecting rod 26.

The socket 58 is preferably made of plastic while the crank 30 and the associated crankpin 40 on the one hand and the connecting rod 26 on the other hand are preferably metallic.

The socket 58 extends into an orifice 60 formed for this purpose in the longitudinal end 26b of the connecting rod 26. In a preferred embodiment, the socket 58 is overmolded on the longitudinal end 26b of the connecting rod 26 to take position in said orifice. Of course, it should be understood that this mode of production does not limit the invention, and that the socket could be forced into the orifice. In all cases, the socket 58 is already secured to the connecting rod 26 when the crankpin 40 must be inserted into the socket to form the ball-joint assembly.

The socket 58 is a cylindrical part with an axis of revolution AR illustrated in dotted lines on figures 2 and 4. The socket 58 extends, according to this axis of revolution, on either side of the end of the connecting rod 26, such that the planar surface of this end is in a groove 64 of the socket 58. Said groove 64 is between a top portion 66 of the socket, arranged on one side of the connecting rod, and a bottom portion 68 of the socket, arranged on the other side of the connecting rod, both portions having the same axial thickness. The overmolding allows radial dimensions of both portions 66, 68 of the socket greater than the corresponding dimensions of the opening of the end of the connecting rod, without difficulties to secure the socket to the connecting rod.

The socket 58 is configured to receive the at least one spherical portion 44, 46 of the crankpin 40, truncated by the lateral flat 48. More particularly, the socket has an internal cavity 70 sized to receive the spherical portion of the crankpin. The internal cavity 70 is delimited at an upper axial end 72 of the socket by a closure wall 71 and extends as far as a lower axial end 74 of the socket 58, open to the outside of the socket and thus forming an opening 76 for the insertion of the crankpin.

The internal cavity 70 has dimensions and a suitable shape to receive the spherical portion of the crankpin 40, and in particular a shape of revolution around the axis of revolution of the socket AR, so as to form a receiving seat allowing the rotation of the spherical portion along three distinct axes. More particularly, the internal cavity 70 comprises an internal annular groove 73 arranged around this axis of revolution, the concave shape of which has a radius of curvature substantially equal to the radius of the spherical portion intended to be housed in this internal cavity 70.

The closure wall 71 formed by the upper axial end 72 prevents the introduction of dirt or water into the internal cavity 70 of the socket. Furthermore, the closure wall 71 is arranged so as not to block the free rotation of the spherical portion within the internal cavity 70. To this end, a clearance zone 75 is provided between the closure wall 71 and the spherical portion of the crankpin present in the socket. In the example illustrated, as mentioned previously, the at least one spherical portion, here the two spherical portions, comprise a top flat 50, arranged opposite the connecting collar 42, and the presence of this top flat 50 makes it possible to increase the distance between the spherical portion and the closure wall 71 and to ensure the formation of the clearance zone 75.

Preferably, the clearance zone 75 may be used to contain a sufficient amount of a lubricant, for instance a grease. Alternatively, the socket 58 may be impregnated or treated with a lubricant substance, for instance oil or graphite.

As mentioned, the lower axial end 74 of the socket 58 comprises an opening 76 through which the spherical portion of the crankpin is able to be inserted. This opening 76 is delimited by a peripheral edge 77, which forms a circle with a diameter greater than the diameter of the spherical portion.

According to the invention, the socket 58 comprises an obstruction wall 78 which extends through this opening 76 to locally reduce the passage section of the opening, in particular to prevent the axial movement of the spherical portion of the crankpin 40 when the latter is inserted into the internal cavity 70. The obstruction wall 78 extends part of the peripheral edge 77, being delimited by a transverse edge 79 forming a chord of the circle formed by this peripheral edge 77.

As seen in Figure 4, illustrating in section an assembled position of the ball-joint assembly, with the spherical portion of the crankpin 40 inserted into the socket 58, the obstruction wall 78 is facing the connecting collar 42 and it forms a means of retaining the spherical portion 44, 46 of the crankpin 40 when the latter is inside the internal cavity. More particularly, in the assembled position, the lateral flat 48 of the crankpin 40 is not in the axial alignment of the transverse edge 79 of the obstruction wall 78, that is to say does not extend in a plane parallel to this transverse edge. In this way, an axial movement of the crankpin, which might otherwise tend to disengage the spherical portion 44, 46 of the crankpin from the internal cavity of the socket, is blocked by contact of the spherical portion against the obstruction wall 78.

To obtain this assembled position, the crankpin 40 and the socket 58 should be arranged or pre-positioned in an adequate angular position, with the lateral flat 48 of the crankpin which is in a plane parallel to the transverse edge 79 of the obstruction wall 78. Once correctly pre-positioned, the crankpin is moved axially, along the axis of elongation Ax, and the transverse edge 79 of the obstruction wall 78 slides along the lateral flat 48, without forming an obstruction to the insertion of the spherical portion of the crankpin into the socket. It is understood that it is only in this angular position, with the lateral flat 48 which is parallel to the transverse edge 79, that the spherical portion can penetrate into the socket, the obstruction wall 78 otherwise reducing the passage section so as to block the axial movement of the crankpin.

It follows from the characteristics of the ball-joint assembly, and in particular from the shape of the socket 58 with its obstruction wall 78 and from the shape of the crankpin 40 with the lateral flat 48, that the assembly process is easier for the operator on the assembly line. The assembly of the connecting rod 26, 28 on the crank 30, 32 is carried out in two steps, without the need for a clamping tool, such that the assembly can be easily carried out by the operator on the assembly line of the vehicle.

A first step is a translation step as it has just been described, along an axis parallel to the axis of elongation Ax of the crankpin and/or parallel to the axis of revolution AR of the socket. During this first step, the operator inserts the spherical portion of the crankpin into the socket by matching the orientation of the transverse edge 79 and the orientation of the obstruction wall 78. The operator stops the translation when the spherical portion is in position within the internal cavity and in particular in cooperation with the internal annular groove 73. In this position, the whole of the spherical portion has passed beyond the wall of obstruction 78 and the connecting collar 42 faces the transverse edge 79 of the obstruction wall 78.

A second step is a step of rotation of the crank relative to the connecting rod, around the axis of translation of the first step. During this second step, the crankpin pivots so that the orientation of the lateral flat changes with respect to that of the obstruction wall, which is possible because the transverse edge 79 of the obstruction wall is at this time opposite the connecting collar of the crankpin. The rotation of the crank relative to the connecting rod is facilitated by the position of the spherical portion within the internal cavity, in the internal annular groove.

In other words, once the crankpin 40 has been inserted into the internal cavity 70 of the socket 58, the realization of a rotary movement makes it possible to move the obstruction wall 78 opposite a part of the spherical portion of the crankpin other than the lateral flat.

As mentioned, the obstruction wall 78 thus participates in enclosing the spherical portion 44, 46 in the internal cavity 70, to prevent movement of the crankpin 40 outside the socket during the displacement of the vehicle. Once the second step has been completed, the linkage system is fixed to the body of the vehicle, and the combination of the socket and the spherical portion allows a ball-joint between the crank bearing the spherical portion and the connecting rod bearing the socket.

It is notable that the second step of rotation of the assembly leads to an angular position of the lateral flat 48 with respect to the transverse edge 79 such that the to-and-fro movements of the linkage system and the consequent rotation of the spherical portion of the crankpin within the socket never result in a parallel orientation of the lateral flat with respect to the transverse edge, which could lead to an axial clearance of one with respect to the other and a consequent unintended disassembly of the system.

The invention as it has just been described achieves the desired aim by providing a ball-joint assembly which is easy to mount by an operator on the assembly line of the vehicle. Of course, the invention is not limited to the examples which have just been described and many adaptations can be made to these examples without departing from the scope of the invention.

## Claims

1. A ball-joint assembly (34, 36, 38) of a crank (30, 32) and a connecting rod (26, 28) of a windscreen wiper module, comprising a crankpin (40) fixed to the crank (30, 32) and a socket (58) housed in a hole (60) of one end (26b, 28b) of the connecting rod (26, 28), the socket (58) being configured to receive in an internal cavity (70) thereof, a spherical portion of the crankpin (40), **characterized in that** the spherical portion of the crankpin (70) comprises a lateral flat (48), the socket (58) comprising a lower axial end (74 ) which comprises on the one hand an opening (76) for the passage of the crankpin (40) in the internal cavity (70), and on the other hand an obstruction wall (78) extending a peripheral edge (77) delimiting the opening (76) of said lower axial end (74), the obstruction wall (78) extending through the opening (76) to form a reduced passage section for maintaining the crankpin (40) in the internal cavity ( 70) of the socket (58).

2. The ball-joint assembly (34, 36, 38) according to the preceding claim, in which the socket (58) is overmolded onto the end (26b, 28b) of the connecting rod (28, 28).

3. The ball-joint assembly (34, 36, 38) according to any one of the preceding claims, in which the crankpin (40) has a first spherical portion (44) and a second spherical portion (46), arranged on either side of the crank (30, 32), each spherical portion (44, 46) being truncated by a lateral flat (48).

4. The ball-joint assembly (34, 36, 38) according to the preceding claim, in which the lateral flats (48) are arranged in the same plane, substantially perpendicular to a main elongation plane of the crank (30, 32).

5. The ball-joint assembly (34, 36, 38) according to any preceding claim, wherein the or each spherical portion of the crankpin (40) is attached to the crank (30, 32) via a connecting collar (42), the obstruction wall of the socket facing the connecting collar (42) when the corresponding spherical portion is housed in the cavity of the socket (58).

6. The ball-joint assembly (34, 36, 38) according to any one of the preceding claims, in which the internal cavity (70) of the socket has a shape of revolution around an axis of revolution of the socket (AR) , said obstruction wall (78) extending perpendicular to said axis of revolution from an edge of the opening (76) of the socket (58).

7. The ball-joint assembly (34, 36, 38) according to the preceding claim, in which the internal cavity (70) has an internal annular groove (73) arranged around the axis of revolution of the socket (AR) and configured to receive the spherical portion (44, 46) of the crankpin (40).

8. The ball-joint assembly (34, 36, 38) according to any preceding claim, wherein the spherical portion (44, 46) of the crankpin (40) has a top flat (50), opposite the crank (30, 32), which provides a clearance zone with a closing wall (71) of the socket (58).

9. A vehicle comprising a windscreen wiper module comprising a ball-joint assembly (34, 36, 38) according to any one of the preceding claims.

10. A method of assembling a ball-joint assembly (34, 36, 38) according to claims 1 to 8 comprising at least:
- a step of inserting the crankpin (40) into the socket (58), the socket (58) having been previously secured to the connecting rod (26, 28), by a translational movement along an insertion axis perpendicular to the crank to which the crankpin is secured, the crankpin (40) passing through the opening (76) of the socket with the lateral flat facing the obstruction wall (78),
- a step of rotating the connecting rod (26, 28) relative to the crank (30, 32) around the insertion axis to cause the spherical portion to rotate within the cavity of the socket, the obstruction wall forming an axial clearance stop for the spherical portion (44, 46).
